# EUROPEAN PATENT SPECIFICATION

(11) **EP 0 371 064 B1**
(45) Date of publication and mention of the grant of the patent: **12.04.1995**
(21) Application number: 88906992.8
(22) Date of filing: 11.08.1988
(51) Int. Cl.: G09G 1/16, G09G 1/28

(54) **LINE MARKER FOR A VISUAL DISPLAY UNIT**
ZEILENMARKE FÜR EIN BILDSCHIRMSICHTGERÄT
MARQUEUR DE LIGNE POUR TERMINAL A ECRAN DE VISUALISATION

(30) Priority: 11.08.1987 GB 8718925; 15.03.1988 GB 8806168
(43) Date of publication of application: 06.06.1990
(73) Proprietor: MURRELL, Nicholas John, Perth PH2 2XD (GB); MURRELL, Joyce Agnes, Perth PH2 2XD (GB)
(72) Inventor: MURRELL, Nicholas John, Perth PH2 2XD (GB); MURRELL, Joyce Agnes, Perth PH2 2XD (GB)
(74) Representative: Smith, Philip Antony
(86) International application number: GB8800664
(87) International publication number: WO8901679

(56) References cited:
- EP-A- 0 149 780
- EP-A- 0 183 246
- WO-A-87/02814

## Description

This invention relates to an electronic line marker for highlighting lines on a visual display unit (VDU).

When a substantial amount of information is displayed on a VDU it can be very difficult to locate a specific line or point on the display. A visible line marker on the VDU, which is movable independently of the displayed information, overcomes this problem in the same way as a straight edge, ruler, or marker pen is used on paper for easy location of a place in tables, printing etc.

Visible line markers are provided on some computer systems but they are somewhat complex, require a large amount of additional memory, highly stable timing circuits and a dedicated piece of software to control them. For these reasons they are expensive and are only provided on more complex computer systems or computer controlled instruments such as Nicolet, Tectronix, Hewlett Packard Oscilloscopes. EP-A-0 183 246 discloses such a line marker system. In this a software program running on the main CPU of a computer is used to generate and position a cursor/arrow in a video signal.

The software which is required has to move the line independently of the displayed information. To do this it needs to be able to address each pixel and its attributes individually. Consequently about ¼ of a megabyte of additional display memory is needed for a display with 720 x 350 pixel resolution.

It is also necessary to provide dedicated keys to control the line functions such as colour selection, line positioning in fast and normal line scrolling modes, line thickness and line on/off. In a PC (personal computer) system, for example, there may not be any keys available for these functions.

If the line marker can only move a pixel at a time then with a normal display it would only be possible to move the line marker by about 12 steps a second if it is to be stopped and accurately positioned in the correct place. For example with a display 350 pixels deep it would take nearly half a minute to scan the line from top to bottom of the screen.

To achieve an acceptable speed of movement requires a step speed greater than the refresh period of the display and this will result in the line marker jumping over pixels.

Another problem encountered in line marker systems is that not all displays start from the same datum pixel and character lines may be offset from a predetermined line marker datum.

According to the present invention there is provided apparatus and method for electronically generating a movable line marker on a visual display unit (VDU) as they are defined in Claims 1 and 19.

The invention is now described in more detail by way of example with reference to the drawings in which:
Figure 1 shows schematically how an embodiment of the invention is attached to a computer system; and
Figure 2 is a block circuit diagram of a first embodiment of the invention showing how line marker signals are generated and inserted into the video signals for display on the VDU.
Figure 3 shows a block diagram of a second embodiment of the invention;
Figure 4 shows a more detailed circuit diagram of the second embodiment of the invention;
Figure 5 shows a first portion of a video line combiner circuit for generating a line marker signal from a pixel position signal, a text line position signal, a thick/thin line signal, and a line on/off signal;
Figure 6 shows a second portion of the video/line combiner circuit for combining the line marker signal and a first line colour signal with a video signal; and
Figure 7 shows a contrast control circuit.

The invention described herein requires no memory, no memory control, no software and derives its stable timing from the host computer/terminal. It has a separate keyboard or keys which may be included in the computer/terminal keyboard, overcoming the problem of allocating keys to perform line functions. The separate keyboard also has the advantage that it may be positioned on either side of the main computer-terminal keyboard and in precisely the optimum position. Thus once the VDU electronic movable line marker is fitted it is always ready for instant operation eliminating the need to install, link or run special software or operate a software menu selection to select the line key functions.

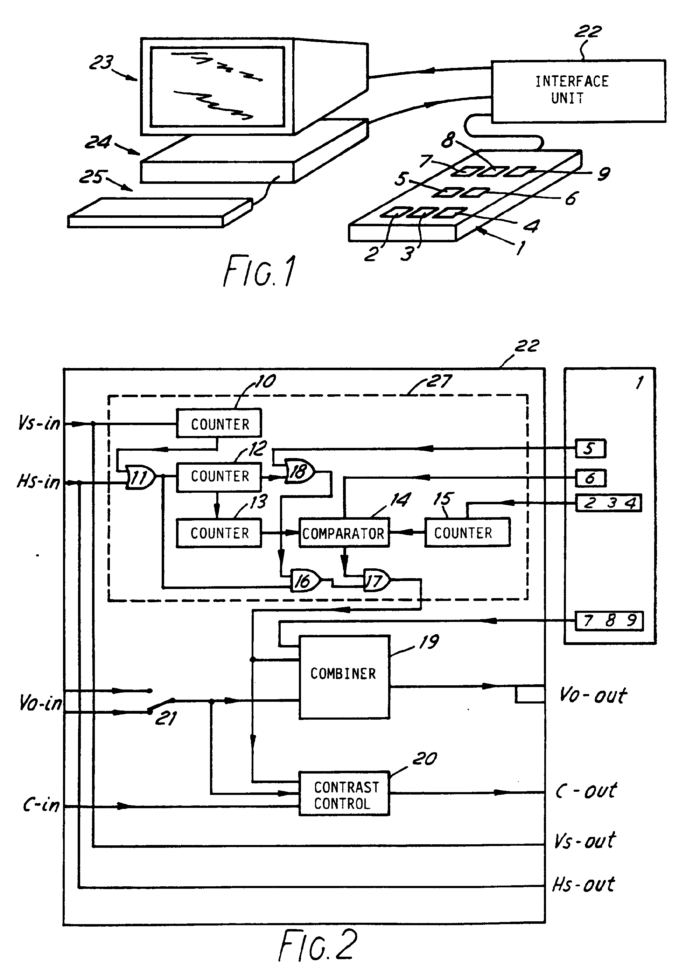

The schematic diagram of figure 1 shows a line marker keyboard 1 including eight keys. Two position keys 2 and 4 move the line marker up and down respectively and a fast/slow key 3 increases the speed of movement of the line marker. A line thickness key 5 lets the user choose between a thick highlighting line or an underline mode of operation. An on/off key 6 enables the user to selectively turn the line marker on or off as required. Three line colour keys 7,8 and 9 (which provide signals which generate Red, Green and Blue video signals respectively) enable a total of 8 colours from black through to white to be generated by depressing different keys or combinations of keys or no keys at all.

The keyboard 1 is coupled to an interface unit 22 which includes the hardware needed to implement the various line functions as selected on the keyboard. The interface unit 22 may be housed in a spare card slot in a computer 24 or it may be provided integrally with the keyboard or separately. The unit 22 is electrically connected between the video output of the computer 24 and video input of a VDU 23.

The circuitry needed to implement the line functions described with reference to keyboard 1 of figure 1 is shown in the block diagram of figure 2.

The digital video input to the interface unit 22 comprises a vertical synchronising signal (Vs-in), a horizontal synchronising signal (Hs-in), a video signal (Vo-in) and a contrast signal (C-in). The video output from the unit 22 has corresponding signals Vs-out, Hs-out, Vo-out and C-out. There are direct electrical connections from Vs-in to Vs-out and from Hs-in to Hs-out, or connections may be made through a buffer.

The position and thickness of a line on the screen of the VDU is manually controlled by keys 2, 3 and 4 on the keyboard 1 and the signals Vs-in and Hs-in from the video input. These all form the inputs to a counting and comparison circuit 27 on the interface unit 22.

Vs-in is the input to counter 10. The output of counter 10 and Hs-in are the two inputs to an OR gate 11. The output of gate 11 is coupled to the input to a second counter 12 and also to one of the inputs to AND gate 16. A preset output from counter 12 is one of the inputs to an OR gate 18 and the other input to this gate is the output of the thick line key 5. The output of gate 18 is the second input to gate 16 and the output of gate 16 is one of the inputs to an AND gate 17.

A second output from the counter 12 is the input to another counter 13 and the output of this is one of the inputs to a comparator 14. The comparator 14 has two further inputs. One of these inputs is from the line on/off key 6 and this determines whether or not a signal is output by the comparator. The other input to the comparator comes from a counter 15. The counter 15 is controlled by signals generated by the line position keys 2 and 3 and the fast key 4 to adjust the output of the counter 15.

The output of the comparator 14 is coupled to the second input of the AND gate 17. The output of the gate 17 is the output of the counting and comparison circuit 26 and is coupled to one of the inputs to a video line combiner 19 and also to one of the inputs to a contrast control unit 20. The video line combiner 19 has two further inputs. One of these receives signals from the colour control keys 7, 8 and 9 to determine what colour of line marker should be generated.

The Vo-in signal comes through either a colour or monochrome input and passes through a switch 21 before being coupled to the remaining input of the video line combiner. The contrast signal C-in is the input to the contrast control unit 20 which also receives the video input V-in for highlighting or for cases where the contrast signal is contained in the video signal. The output of the contrast control unit 20 is the contrast output signal C-out.

In operation, counter 10 is preset to turn on the gate 11 at the top start position of the first line of text. Gate 11 controls the Hsync (Hs-in) pulses to counter 12 which counts the number of vertical pixels and is set to output a signal every complete line of text to the line counter 13. The output of the line counter 13 is compared in the comparator 14 with the keyboard (2,3 and 4) controlled up/down position line counter 15. If the outputs from the two line counters 13 and 15 match in the comparator 14 and the line on/off key 6 is ON then the comparator outputs a signal for the duration of one line.

This signal is fed into gate 17 together with the line length and thickness signal from gate 16. The line length is controlled by the Hsync (Hs-in) signal and the line thickness signal is derived from gate 18. If the thick/thin line key 5 which produces a thick line is ON a continuous signal is present at gate 18 output. If the line thickness key 5 is OFF an output from gate 18 is only present at the preset thin line position from counter 12.

The line marker "ON" signal from gate 17 is fed to the video line combiner circuit 19 which integrates (combines) the line colour selected signal from the keyboard keys 7, 8 and 9 and video signals (Vo-in) under the control of the line marker ON signal. The resultant signal is then put out to the VDU display via (Vo-out).

The line marker "ON" signal is also supplied to the contrast control 20 which automatically produces a signal if both a video (Vo-in) and line marker on signal are present. So that the line and displayed information are clearly distinguishable, the signal from the contrast control 20 is put out to (C-out) which controls either the contrast or the intensity of the display.

If the video signal (Vo-in) contains the contrast signal (C-in) then the combiner 19 and contrast control 20 are combined. If a contrast (C-in) signal is not available the combiner 19 may be fitted with an inverter so that when a line signal is present the video (Vo-out) signal is inverted so that the line and normal display information can be easily distinguished.

The line marker position keys 2 and 4 control an associated pulse generator circuit which supplies pulses to the up/down line marker counter 15. The key 3 is a fast key which is operated in conjunction with either the up key 2 or down key 4 enabling a high pulse rate and fast scrolling of the marker line.

The counter 10 and counters 12 and 13 are reset every VDU frame scan by the Vsync (Vs-in) pulse, the control lines of which, for clarity, have been omitted from Fig. 2.

The electronic interface card/unit 22 may be fitted with an optional hard or software switch 21 to select colour or monochrome signal and to adjust counter 10, pixel counter 12, Vsync/Hsync signal polarity and line counters 13 and 15. Again, for clarity, the control lines have been omitted from Fig. 2.

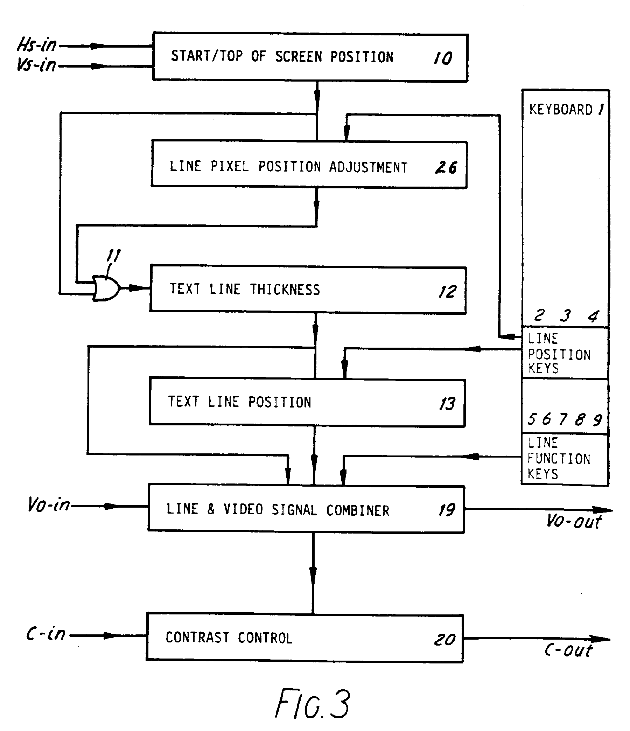

A second embodiment of the invention is shown in the block diagram of figure 3. A start top of screen position block 10 receives horizontal and vertical sync. signals from an input video signal and determines the start position of a first line of text for example. The start signal from this block 10 is the input to a line/pixel position adjustment block 26 and also to an OR gate 11 the other input of which receives the pixel position output of the block 26. Block 26 also has an input from the line position keys 2,3,4.

The output of gate 11 is coupled to the input of a text line thickness block 12 whose output is coupled to the input of a text line position block 13 which also has an input from the line position keys 2,3,4. The output of block 13 is coupled to an input of a line and video signal combiner 19. The other inputs to the combiner 19 are, the video signal, Vo-in and signals from the line function keys 5,6,7,8,9.

The combiner has two outputs, one for the video output signal Vo-out and one forming an input to a contrast control circuit 20 which has a contrast input C-out.

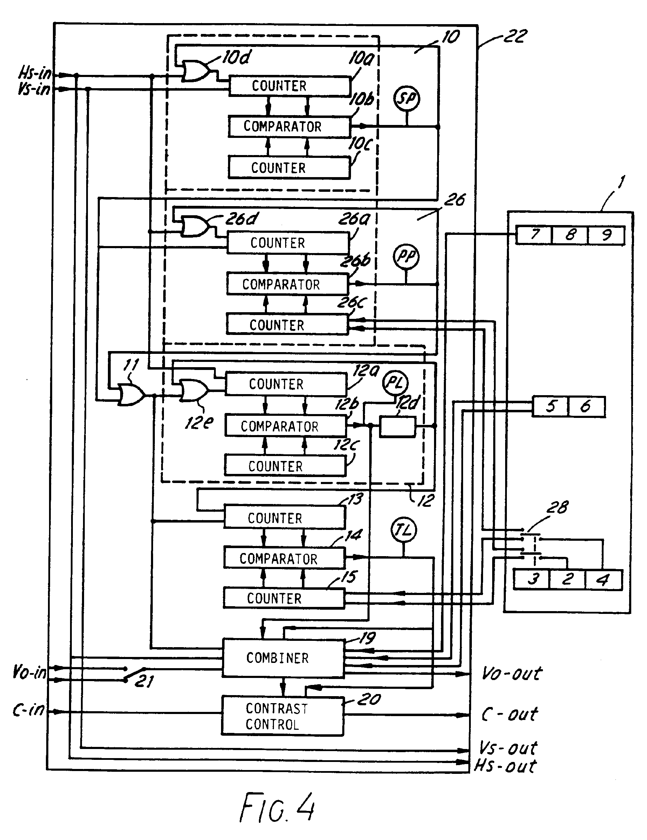

Blocks 10,12,13 and 15 are analogous to the counters 10,12,13 and 15 in the first embodiment. The circuit diagram of the second embodiment of the invention is shown in more detail in figure 4. This figure shows the keyboard 1 with its keys 2-9 and the interface unit 22. The blocks of circuitry corresponding to blocks 10,26 and 12 in figure 3 are clearly shown.

The inputs and outputs of the interface circuit are the same as those in the first embodiment. The Hs-in inputs and the Vs-in signal are coupled directly to the Hs-out and Vs-out outputs.

The start/top of screen position block 10 comprises an OR gate 10d with one of its inputs coupled to the Hs-in input and the other input coupled to the start position SP output of a comparator 10b. The output of gate 10d is coupled to the clock input of a counter 10a the output of which is coupled to one of the inputs to the comparator 10b. The other input of comparator 10b is coupled to a presettable top of screen start position counter or switch 10c. A reset input on counter 10a is coupled to the Vs-in input. The start signal output of the comparator 10b is the output of block 10 and is coupled to one of the inputs to OR gate 11 and also to a reset input of counter 26a in the line pixel position adjustment block 26.

In block 26 an OR gate 26d has one of its inputs coupled to the Hs-in input and the other to the output of a comparator 26b which is the pixel position signal (PP). The output of gate 26d is coupled to the clock input of counter 26a and the output of counter 26a is coupled to one of the inputs to the comparator 26b. The other input to comparator 26b is coupled to a counter 26c which has up and down inputs coupled to the up/down keys 2,4, on the keyboard 1 when pixel (slow) mode is selected with key 3.

The pixel position PP output of comparator 26b is coupled to the other input of gate 11 the output of which is coupled to an input of an OR gate 12e in the text line position block 12. The other input to this gate 12e is coupled to the output of an edge detection circuit 12d and the output of the gate 12e is coupled to the reset input of a counter 12a. The clock input of this counter or switch 12a is coupled to the Hs-in input and its output is coupled to one of the inputs to a comparator 12b. The other input to comparator 12c is coupled to the output of a presettable counter 12c. The pixel line PL output of comparator 12b is coupled to the input of the edge detection circuit 12d and also to an input of a line and video combiner circuit 19.

The output of the edge detection circuit 12d is also coupled to the clock input of a counter 13 which counts steps corresponding to character cell blocks. The reset input of this step counter is coupled to the output of gate 11 which is also coupled to an input to the combiner 19. The output of the step counter 13 is coupled to one of the inputs of a comparator 14, the other input being coupled to the output of a counter 15. Counter 15 has its up and down inputs coupled to the outputs of keys 2 and 4 when key 3 is in the block step (fast) mode position. The text line TL output of comparator 14 is coupled to an input of the combiner 19.

The combiner 19 has further inputs coupled to the Vo-in input via switch 21 (as in the first embodiment), to the thick/thin line key 5 and the line on/off key 6, and to the R,G and B outputs generated by keys 7,8 and 9. The combiner has two outputs one coupled to the Vo-out output of the interface unit 22 and the other to an input of a contrast control circuit 20.

Another input of the contrast control circuit 20 is coupled to the C-in input and its output is coupled to the C-out output.

The fast/slow (step/pixel) key on the keyboard operates a switch 28 which switches the outputs of the up/down keys 2,4 between the up/down inputs of counter 26c and the up/down inputs of counter 15.

In operation, the vertical sync signal is used to reset the datum position timer or counter 10a. When the vertical sync signal changes state the datum counter 10a starts counting until the number of H sync pulses match the preset datum position in counter 10c. The output from the comparator 10b then stops the datum counter 10a and enables the pixel counter 26a and the pixel line counter 12a with the SP signal.

The pixel counter 26a counts once for every H sync pulse until it matches the pixel position counter 26c. The comparator 26B then stops the pixel counter 26a and starts the character cell block counter 12a with the signal PP via gate 11. The pixel position counter 26c is controlled by the up/down keys 2,4 and an associated pulse generator circuit (not shown) which supplies pulses to the up/down counters 15, 26c and by pixel/block step mode select key 3 which routes the up/down key pulses to pixel position counter 26a or block step position counter 15 respectively.

The character cell block counter 12a counts until it matches the preset pixel character cell block size e.g 14 pixels, in 12c. The PL signal from the comparator 12b and edge detection circuit 12d then resets the counter 12a and supplies one count signal to the step counter 13, thus incrementing counter 13 once for every line of text.

The step counter 13 counts until it matches the output of the step position counter 15. The step comparator 14 then turns on the text line signal.

The text line signal is combined with the top of screeen blanking, edge of screen blanking signals, thin underline signal derived from comparator 12b and thick/thin line key switch 5 select signal and line on/off key 6 signal in the combiner 19 to produce a line marker signal therein.

Combiner 19 combines the line colour select key signals 7,8,9 under the control of the line marker signal from 14 with the video signal Vo-in and if a video signal is present also increases the intensity/contrast control signal Co in the video intensity/contrast control circuit 20, thus highlighting the displayed information covered by the marker line by controlling the intensity/contrast control(s) of the VDU with the signal from control circuit 20. Logic gates 10d, 26d 12e are used to control the counters respectively. Logic gate 11 is used to "OR" the outputs from comparators 10b and 26b to inhibit counter 12a until the pixel counter is finished.

Optional switch 21 which may be controlled either under hardware or software is used to switch between different video signals e.g monochrome or colour.

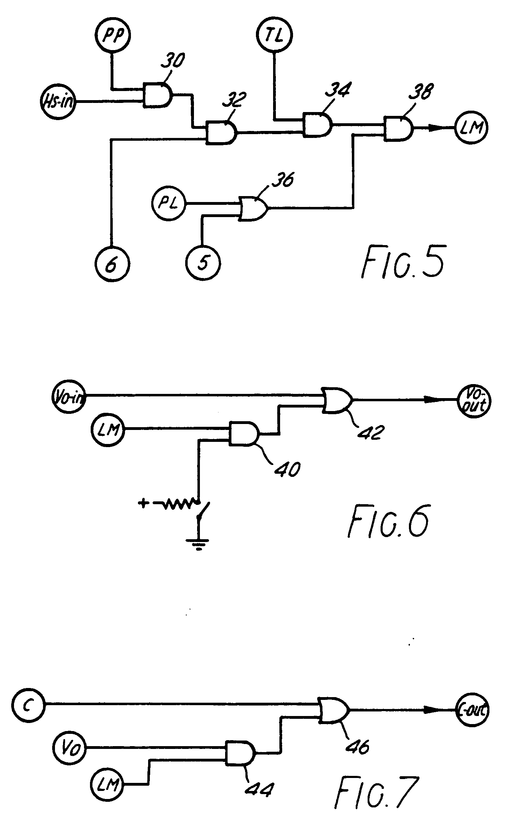

The line and video combiner circuit 19 consists of two parts which are shown in figures 5 and 6 respectively.

The first part is shown in figure 5 and has inputs from the HS-in sync signal, the pixel position signal PP, the text line signal TL, the pixel line signal PL, the line on/off key 6 and the thick/thin line key 5. Hs-in and PP form the inputs to an AND gate 30 which controls the start position of a line on the screen. Hs controls the length of line and turns the line off during the flyback period of the VDU. The output of gate 30 is coupled to an input of an AND gate 32 the other input of which receives the line on/off signal from key 6. The output of gate 32 is coupled to one of the inputs to an AND gate 34 which controls the row of text covered by the line marker. The PL signal and the thick/thin line signal from key 5 form the inputs of an OR gate 36. The output of gates 34 and 36 are the inputs to an AND gate 38 the output of which is the line marker signal LM.

The second part of the combiner circuit 17 comprises three similar blocks one of which is shown in figure 6. The block has inputs from Vo-in the LM signal, and one of the R,G and B colour signals from keys 7,8 and 9, one of R,G and B signals going to each of the three blocks.

The LM signal and the colour signal form the inputs to an AND gate 40, the output of which is coupled to an input to an OR gate 42. The other input to this OR gate is the Vo-in signal and the output is the Vo-out combined line and video signal. The three blocks are connected in series to combine each of the R,G and B signals with the video signals.

An optional exclusive OR gate may receive either the LM signal or the Vo-in signal the other input receiving a key signal to selectively invert the output Vo-out.

The contrast control circuit shown in figure 7 receives inputs from the C-in signal, the LM signal and the Vo-in signal. The VO-in signal, the LM signal form the inputs to an AND gate 44 and the output of this is coupled to the input of an OR gate 46. The other input of gate 46 receives the C-in signal and the output is the C-out signal which controls the contrast control or the intensity control or both contrast and intensity controls on the VDU to highlight the text covered by the line marker.

Three basic standards of video/contrast signals are used in computers and terminals. So that the line does not obliterate the displayed information the line marker contrast control circuit is connected as below.
- 1. Monochrome: - video signal with contrast signal
- 2. Colour: - RGB video signal with 3 individual contrast signals
- 3. Colour: - RGB video signals with 1 contrast signal as used by IBM PC in their colour graphics card. For colour with a single contrast control the 3 Red, Green, Blue video signals are ORed before going to 44 as the Vo signal.

This invention produces a thick line emulating using a marker pen and a thin line emulating underlining. With a colour display the line colour can be selected from the keyboard which can also produce a black line which has the effect of highlighting the text or displayed information. In monochrome, only one colour can be shown together with a black line which again highlights the text or displayed information. In fact only contrast and/or intensity need to be changed for monochrome operation. The line may be scrolled over the displayed information or alternatively the line may be left in a set position and the displayed information scrolled. The invention works with any computer or terminal with the appropriate adaptor and is totally independent of any software being used.

The VDU line marker electronic interface card/unit 22 has been described with TTLI (monochrome + contrast) and RGBI (colour + contrast) video signal compatability. The electronic interface card/unit can easily be adapted to work with any other standards of VDU signals or video signals e.g. TTL, RGB, RGB/TTL, XRGB, RGB-Synch, RGB-Linear, Composite Video, MDA, CGA, EGA, VGA, MCGA, PAL, NTSC, SECAM etc and the new digital and analogue standards when introduced with the appropriate decoder/coder and with any display technology e.g. CRT, liquid crystal, plasma, electroluminescent etc.

The line marker described operates by controlling the line position and thickness with four digital counters. These counters are synchronized with the horizontal and vertical sync pulses and thus no further timing circuitry is needed. Separate keys are provided for controlling the line thus avoiding the need to use any of the keys on the main keyboard. The line is generated by hardware rather than software and no additional processor or memory areas are needed to implement it. Thus the line may be displayed at any time.

The system described enables a user to select to move in steps of character block or blocks so that, for example, a display with a vertical resolution of 350 pixels and a character cell block depth of 14 pixels giving 25 line blocks, now only requires the marker line to move 25 steps (25 character cell blocks) to traverse from top to bottom of the screen taking just over 2 seconds (25 line blocks/12 steps) instead of nearly half a minute moving a pixel at a time (350 pixels/12 steps). The marker line thickness can be adjusted to suit any cell block width or depth or can be increased to cover a number of character blocks so that the marker line can move complete columns or sections at a time.

To be able to position the line where the displayed information does not exactly coincide with the standard character cell block or start at the normal datum, or for software programmes e.g CAD. graphs, desktop publishing etc. that display information at any pixel position on the screen, a second mode of line movement is incorporated which enables the marker line to be adjusted pixel by pixel anywhere within the selected cell block or blocks.

By fitting the pixel position circuit first, followed by the character cell block(s) position circuit, fast accurate, simple positioning of the marker line is achieved together with the advantage of being able to select a pixel position anywhere on the screen or offset the cell blocks when the cell blocks do not start at the recognised datum position.

The settings for the datum position, pixel block and character cell block which may be the same or different, are normally situated on the line marker card but alternatively, together or separately, with the line colour selection, line thickness, line on/off, line positioning and pixel or cell block(s). Step selection may be controlled with a suitable interface by the computer or terminal, keyboard, touch screen, mouse, lightpen or under software control etc.

The marker line, in addition to highlighting the displayed information, may be interfaced to the computer so that the displayed information may be acted upon, printed out, networked, faxed, telexed etc.

A vertical Y axis marker can be produced on the same basic principles as the X axis line marker described above, except that the counters need to be clocked by an oscillator synchronised with the pixel scan frequency.

Two or more lines can be displayed simultaneously, either in the same axis or different axes. The line marker systems are duplicated and may have either 2 sets of keys or a changeover key. The outputs of the video and contrast signals are combined prior to leaving the card (22) for the display (23).
When the video and line signals are combined on a colour display the line will change the colour of any information it covers to a composite colour e.g red line and blue text will produce magenta text.

An infinite colour range can be obtained with an analogue signal and using a potentiometer control(s) instead of keys. The basic design with a colour display produces 8 line colours. The line colours may be extended by controlling the contrast signals with additional keys on the keyboard.

Pixel position adjustment may be used to also traverse the screen pixel by pixel.

The (LM) signal may also be used like a light pen or mouse to command software action e.g alter a menu, print a line, confirm a decision etcc. The LM signal may be used with a key for this purpose.

The line marker may be interfaced with overhead projectors that are connected to VDU computer or similar displays.

The circuits described herein are digital circuits but they may also be implemented in analogue form or alternatively in a microprocessor controlled design.

## Claims

1. Apparatus for electronically generating a movable marker for a line on a visual display unit (VDU) (23) comprising circuit means (1,22) having input means coupled to a source of video signals and output means coupled to the visual display unit, the circuit means (1,22) comprising detecting means (10) responsive to synchronising information in the video signal for detecting a desired datum position in the video signal, means for indicating the desired position in the video signal at which a marker is to be inserted in accordance with a control input, characterised by counting means (12,13,26) coupled to the detecting means and responsive to the synchronising information to provide a signal representing a scanning position in the video signal relative to the datum position and means (19,20) for generating the marker in an output video signal at the output means when the scanning position represented by the signal from the counting means (12,13,26) reaches the desired position as determined by the indicating means.

2. Apparatus according to claim 1 characterised by a second source of video signals (7,8,9) and in that the means for generating the marker comprises means (19) for combining the first and second video signals when the scanning position reaches the desired position.

3. Apparatus according to claim 2 characterised by the second source of video signals comprising at least one source of colour signals.

4. Apparatus according to claim 3 characterised in that there are three selectable sources of colour signals.

5. Apparatus according to any one of claims 1 to 4 characterised in that the means for generating the marker includes means (20) responsive to the means indicating the desired position of the first video signal for providing a signal to control the contrast of the VDU display of the output video signal in the desired portion.

6. Apparatus according to any one of claims 1 to 5 characterised in that the means for generating the marker includes means (20) responsive to the means indicating the desired position in the first video signal for providing a signal to control the intensity of the VDU display of the resultant video signal in the desired position.

7. Apparatus according to any of claims 1 to 6 characterised in that the control input comprises manually operable means (2,4) for providing control signals to alter the desired position in the first video signal.

8. Apparatus according to any preceding claim characterised in that the circuit means (22) includes means (26) responsive to further control inputs for moving the desired position in steps of one pixel.

9. Apparatus according to claim 8 characterised in that the control inputs include means (3) for switching the control signals between the one pixel movement means (26) and a block movement means (15).

10. Apparatus according to any one of claims 1 to 9 characterised in that the counting means includes means (12) for counting the number of vertical pixels in a line.

11. Apparatus according to any of claims 1 to 10 characterised in that the control inputs include means (5) for providing a signal to the combining means (19) for altering the thickness of the marker.

12. Apparatus according to any preceding claim characterised in that the video signals are digital signals.

13. Apparatus according to any of claims 1 to 11 characterised in that the video signals are analogue signals.

14. Apparatus according to any of claims 1 to 11 characterised in that the video signals are composite video signals.

15. Apparatus according to any of claims 1 to 11 characterised in that the video signals comprise analogue and digital video signals.

16. Apparatus according to any preceding claim characterised in that the circuit means (22) includes means (6) for switching the generating means between on and off conditions thereby selectively generating the marker.

17. Apparatus according to any preceding claim characterised in that the marker may be switched between a first mode in which it is movable in a vertical direction and a second mode in which it is movable in a horizontal direction.

18. Apparatus according to any preceding claim characterised in that two or more markers can be generated on the same display.

19. A method for electronically generating a movable marker for a line on a visual display unit (VDU) characterised in that the method generates and positions the line marker in the video signal by the steps of receiving a video signal, detecting a datum position in the video signal from its associated synchronising information, counting in response to the synchronising information to produce a signal representing a scanning position in the video signal relative to the datum position, providing a signal indicating the desired position in the video signal at which a marker is to be inserted in accordance with a control input, and generating the marker in an output video signal when the scanning position in the video signal reaches the desired position.

20. A method according to claim 19 characterised in that the step of generating the marker comprises providing a second video signal and combining the first and second video signals.

21. A method according to claim 19 characterised in that the step of generating the marker comprises increasing the contrast of the VDU display of the output.

22. A method according to claim 19, 20 or 21 characterised in that the step of generating the market comprises increasing the intensity of the VDU display of the resultant video signal.

## Patentansprüche

1. Vorrichtung zur elektronischen Erzeugung einer verschiebbaren Zeilenmarke in einem Bildschirmsichtgerät (VDU) (23), enthaltend Schaltungsmittel (1,22) mit an eine Videosignalquelle angeschlossenen Eingangsmitteln und an das Bildschirmsichtgerät angeschlossenen Ausgangsmitteln, wobei die Schaltungsmittel (1,22) Detektormittel (10), die auf Synchronisationsinformationen im Videosignal ansprechen, um eine gewünschte Bezugsposition im Videosignal festzustellen, und Mittel enthalten, um die gewünschte Position im Videosignal, an der die Marke eingefügt werden soll, entsprechend einer Steuereingabe anzuzeigen, gekennzeichnet durch an die Detektormittel gekoppelte Zählermittel (12,13,26), die auf die Synchronisationsinformationen unter Erzeugung eines Signals reagieren, das eine Abtastposition im Videosignal relativ zur Bezugsposition darstellt, und durch Mittel (19,20) zur Erzeugung der Marke in einem Ausgabevideosignal an den Ausgangsmitteln, wenn die durch das Signal der Zählermittel (12,13,26) dargestellte Abtastposition die gewünschte, durch die Anzeigemittel festgelegte Position erreicht.

2. Vorrichtung nach Anspruch 1, gekennzeichnet durch eine zweite Videosignalquelle (7,8,9) und dadurch, daß die Mittel zur Erzeugung der Marke Mittel (19) zur Kombination des ersten und zweiten Videosignals enthalten, wenn die Abtastposition die gewünschte Position erreicht.

3. Vorrichtung nach Anspruch 2, dadurch gekennzeichnet, daß die zweite Videosignalquelle mindestens eine Farbsignalquelle enthält.

4. Vorrichtung nach Anspruch 3, dadurch gekennzeichnet, daß drei auswählbare Farbsignalquellen vorhanden sind.

5. Vorrichtung nach einem der Ansprüche 1 bis 4, dadurch gekennzeichnet, daß die Mittel zur Erzeugung der Marke Mittel (20) enthalten, die auf die Mittel zur Anzeige der gewünschten Position im ersten Videosignal unter Erzeugung eines Signals im Ausgabevideosignal zur Steuerung des Kontrasts des VDU-Sichtgeräts in der gewünschten Position ansprechen.

6. Vorrichtung nach einem der Ansprüche 1 bis 5, dadurch gekennzeichnet, daß die Mittel zur Erzeugung der Marke Mittel (20) enthalten, die auf die Mittel zur Anzeige der gewünschten Position im ersten Videosignal unter Erzeugung eines Signals im resultierenden Videosignal zur Steuerung der Intensität die VDU-Sichtgeräts in der gewünschten Position ansprechen.

7. Vorrichtung nach einem der Ansprüche 1 bis 6, dadurch gekennzeichnet, daß die Steuereingabe manuell betätigbare Mittel (2,4) zur Erzeugung von Steuersignalen aufweist, um die gewünschte Position im ersten Videosignal zu ändern.

8. Vorrichtung nach einem der vorhergehenden Ansprüche, dadurch gekennzeichnet, daß die Schaltungsmittel (22) Mittel (26) enthalten, die auf weitere Steuereingaben durch Verschiebung der gewünschten Position in Schritten von einem Bildpunkt reagiert.

9. Vorrichtung nach Anspruch 8, dadurch gekennzeichnet, daß die Steuereingaben Mittel (3) zum Umschalten des Steuersignals zwischen den Mitteln (26) zur Verschiebung um einen Bildpunkt und Mitteln (15) zur Verschiebung um einen Block enthalten.

10. Vorrichtung nach einem der Ansprüche 1 bis 9, dadurch gekennzeichnet, daß die Zählermittel Mittel (12) zum Zählen der Anzahl vertikaler Bildpunkte in einer Zeile enthalten.

11. Vorrichtung nach einem der Ansprüche 1 bis 10, dadurch gekennzeichnet, daß die Steuereingabe Mittel (5) enthält, um ein Signal für die Kombinationsmittel (19) zur Änderung der Dicke der Marke zu erzeugen.

12. Vorrichtung nach einem der vorhergehenden Ansprüche, dadurch gekennzeichnet, daß die Videosignale digitale Signale sind.

13. Vorrichtung nach einem der Ansprüche 1 bis 11, dadurch gekennzeichnet, daß die Videosignale analoge Signale sind.

14. Vorrichtung nach einem der Ansprüche 1 bis 11, dadurch gekennzeichnet, daß die Videosignale kombinierte Videosignale sind.

15. Vorrichtung nach einem der Ansprüche 1 bis 11, dadurch gekennzeichnet, daß die Videosignale analoge und digitale Videosignale umfassen.

16. Vorrichtung nach einem der vorhergehenden Ansprüche, dadurch gekennzeichnet, daß die Schaltungsmittel (22) Mittel (6) zum Umschalten der Erzeugungsmittel zwischen den Ein- und Ausschaltzuständen enthalten, um dadurch die Marke wahlweise zu erzeugen.

17. Vorrichtung nach einem der vorhergehenden Ansprüche, dadurch gekennzeichnet, daß die Marke zwischen einem ersten Zustand, in welchem sie in vertikaler Richtung verschiebbar ist, und einem zweiten Zustand, in welchem sie in horizontaler Richtung verschiebbar ist, umschaltbar ist.

18. Vorrichtung nach einem der vorhergehenden Ansprüche, dadurch gekennzeichnet, daß auf dem gleichen Sichtgerät zwei oder mehr Marken erzeugt werden können.

19. Verfahren zur elektronischen Erzeugung einer verschiebbaren Zeilenmarke in einem Bildschirmsichtgerät (VDU), dadurch gekennzeichnet, daß dieses Verfahren die Zeilenmarke im Videosignal erzeugt und positioniertk durch die Schritte Empfangen eines Videosignals, Feststellung einer Bezugsposition in dem Videosignal aus seiner zugehörigen Synchronisationsinformation, Zählen als Reaktion auf die Synchronisationsinformation zur Erzeugung eines Signals, das eine Abtastposition im Videosignal relativ zur Bezugsposition darstellt, Erzeugung eines Signals, das die gewünschte Position im Videosignal anzeigt, an der die Marke entsprechend einer Steuereingabe einzusetzen ist, und Erzeugung der Marke in einem Ausgabevideosignal, wenn die Abtastposition im Videosignal die gewünschte Position erreicht.

20. Verfahren nach Anspruch 19, dadurch gekennzeichnet, daß der Schritt der Erzeugung der Marke das Erzeugen eines zweiten Videosignals sowie die Kombination des ersten und zweiten Videosignals enthält.

21. Verfahren nach Anspruch 19, dadurch gekennzeichnet, daß der Schritt der Erzeugung der Marke die Vergrößerung des Kontrasts des VDU-Sichtgeräts in der Ausgabe umfaßt.

22. Verfahren nach Anspruch 19,20 oder 21, dadurch gekennzeichnet, daß der Schritt der Erzeugung der Marke die Vergrößerung der Intensität des VDU-Sichtgeräts im resultierenden Videosignal umfaßt.

## Revendications

1. Dispositif pour générer de manière électronique un marqueur mobile pour une ligne sur un terminal à écran de visualisation (VDU) (23) comprenant des moyens de circuit (1, 22) ayant des moyens d'entrée reliés à une source de signaux vidéo et des moyens de sortie reliés au terminal à écran de visualisation, les moyens de circuit (1, 22) comprenant des moyens de détection (10) répondant à une information de synchronisation dans le signal vidéo pour détecter une position de donnée souhaitée dans le signal vidéo, des moyens pour indiquer la position souhaitée dans le signal vidéo au niveau de laquelle doit être inséré un marqueur en accord avec une entrée de commande, caractérisé par des moyens de comptage (12, 13, 26) reliés aux moyens de détection et répondant à l'information de synchronisation pour fournir un signal représentant une position de balayage dans le signal vidéo par rapport à la position de la donnée, et des moyens (19, 20) pour générer le marqueur dans un signal vidéo de sortie au niveau de moyens de sortie lorsque la position de balayage représentée par le signal provenant des moyens de comptage (12, 13, 26) atteint la position souhaitée telle que déterminée par les moyens d'indication.

2. Dispositif selon la revendication 1, caractérisé par une seconde source de signaux vidéo (7, 8, 9), et en ce que les moyens pour générer le marqueur comprennent des moyens (19) pour combiner les premier et second signaux vidéo lorsque la position de balayage atteint la position souhaitée.

3. Dispositif selon la revendication 2, caractérisé en ce que la seconde source de signaux vidéo comprend au moins une source de signaux couleur.

4. Dispositif selon la revendication 3, caractérisé en ce que trois sources sélectionnables de signaux couleur sont présentes.

5. Dispositif selon l'une quelconque des revendications 1 à 4, caractérisé en ce que les moyens pour générer le marqueur comprennent des moyens (20) répondant aux moyens indiquant la position souhaitée du premier signal vidéo pour fournir un signal afin de commander le contraste de l'affichage sur le terminal à écran de visualisation du signal vidéo de sortie dans la partie souhaitée.

6. Dispositif selon l'une quelconque des revendications 1 à 5, caractérisé en ce que les moyens pour générer le marqueur comprennent des moyens (20) répondant aux moyens indiquant la position souhaitée dans le premier signal vidéo pour fournir un signal afin de commander l'intensité de l'affichage sur le terminal à écran de visualisation du signal vidéo résultant dans la position souhaitée.

7. Dispositif selon l'une quelconque des revendications 1 à 6, caractérisé en ce que l'entrée de commande comprend des moyens actionnables manuellement (2, 4) pour fournir des signaux de commande afin de modifier la position souhaitée dans le premier signal vidéo.

8. Dispositif selon l'une quelconque des revendications précédentes, caractérisé en ce que les moyens de circuit (22) comprennent des moyens (26) répondant à d'autres entrées de commande pour déplacer la position souhaitée par pas de un pixel.

9. Dispositif selon la revendication 8, caractérisé en ce que les entrées de commande comprennent des moyens (3) pour commuter les signaux de commande entre les moyens de déplacement par pixel (26) et des moyens de déplacement par bloc (15).

10. Dispositif selon l'une quelconque des revendications 1 à 9, caractérisé en ce que les moyens de comptage comprennent des moyens (12) pour compter le nombre de pixels verticaux dans une ligne.

11. Dispositif selon l'une quelconque des revendications 1 à 10, caractérisé en ce que les entrées de commande comprennent des moyens (5) pour fournir un signal aux moyens de combinaison (19) afin de modifier l'épaisseur du marqueur.

12. Dispositif selon l'une quelconque des revendications précédentes, caractérisé en ce que les signaux vidéo sont des signaux numériques.

13. Dispositif selon l'une quelconque des revendications 1 à 11, caractérisé en ce que les signaux vidéo sont des signaux analogiques.

14. Dispositif selon l'une quelconque des revendications 1 à 11, caractérisé en ce que les signaux vidéo sont des signaux vidéo composites.

15. Dispositif selon l'une quelconque des revendications 1 à 11, caractérisé en ce que les signaux vidéo comprennent des signaux vidéo analogiques et numériques.

16. Dispositif selon l'une quelconque des revendications précédentes, caractérisé en ce que les moyens de circuit (22) comprennent des moyens (6) pour faire commuter les moyens de génération entre des états d'activation et de désactivation afin de générer ainsi le marqueur de manière sélective .

17. Dispositif selon l'une quelconque des revendications précédentes, caractérisé en ce que le marqueur peut être commuté entre un premier mode dans lequel il est mobile dans une direction verticale et un second mode dans lequel il est mobile dans une direction horizontale.

18. Dispositif selon l'une quelconque des revendications précédentes, caractérisé en ce que deux marqueurs ou plus peuvent être générés sur l'affichage.

19. Procédé pour générer de manière électronique un marqueur mobile pour une ligne sur un terminal à écran de visualisation (VDU), caractérisé en ce que le procédé génère et positionne le marqueur de ligne dans le signal vidéo à l'aide des étapes consistant à recevoir un signal vidéo, détecter la position d'une donnée dans le signal vidéo à partir de son information de synchronisation associée, procéder à un comptage en réponse à l'information de synchronisation pour produire un signal représentant une position de balayage dans le signal vidéo par rapport à la position de la donnée, fournir un signal indiquant la position souhaitée dans le signal vidéo au niveau de laquelle doit être inséré un marqueur en accord avec une entrée de commande, et générer le marqueur dans un signal vidéo de sortie lorsque la position de balayage dans le signal vidéo atteint la position souhaitée.

20. Procédé selon la revendication 19, caractérisé en ce que l'étape pour générer le marqueur comprend la fourniture d'un second signal vidéo et la combinaison des premier et second signaux vidéo.

21. Procédé selon la revendication 19, caractérisé en ce que l'étape pour générer le marqueur comprend une augmentation du contraste de l'affichage de la sortie sur le terminal à écran de visualisation.

22. Procédé selon la revendication 19, 20 ou 21, caractérisé en ce que l'étape pour générer le marqueur comprend une augmentation de l'intensité de l'affichage du signal vidéo résultant sur le terminal à écran de visualisation.
